# EUROPÄISCHE PATENTSCHRIFT

(11) **EP 1 464 594 B1**
(45) Veröffentlichungstag und Bekanntmachung des Hinweises auf die Patenterteilung: **07.06.2006**
(21) Anmeldenummer: 03007814.1
(22) Anmeldetag: 04.04.2003
(51) Int. Cl.: B65G 21/06, B65G 39/09, F16C 35/00, F16C 33/08

(54) **Lager**
Bearing
Palier

(43) Veröffentlichungstag der Anmeldung: 06.10.2004
(73) Patentinhaber: Hauni Maschinenbau AG, 21033 Hamburg (DE)
(72) Erfinder: Dittombee, Harald, 21339 Lüneburg (DE); Optiz, Roland, 21502 Geesthacht (DE); Quarella, Guido, 21039 Escheburg (DE)
(74) Vertreter: Meier, Frank

(56) Entgegenhaltungen:
- EP-A- 0 394 186
- EP-A- 1 169 926
- EP-A- 1 184 306
- FR-A- 2 652 622
- US-A- 4 059 180

## Beschreibung

Die Erfindung betrifft ein Lager für Stützrollen zum Stützen eines Saugbands zum Fördern eines Strangs der tabakverarbeitenden Industrie, und einen Strangförderer, insbesondere einer Zigarettenstrangmaschine, mit einem solchen Lager. Unter einem Strang der tabakverarbeitenden Industrie wird hier insbesondere ein Faserstrang, vorzugsweise aus Schnitttabak verstanden.

Derartige Lager sind aus dem Stand der Technik bekannt. So zeigt beispielsweise die eigene EP 1169926 A1 ein solches Lager. Die Strangförderer, deren Stützrollen auf solchen Lagern gelagert sind, dienen in einer Zigarettenstrangmaschine dazu, den Tabak, welcher in Form eines Schauers dem den Boden eines Strangführungskanals bildenden Strangförderer zugeführt wird, in einer Strangbildungszone anzusammeln und aus dieser - ggf. durch eine Überschussabnahmeeinrichtung hindurchabzufördern. Als Strangförderer wird in modernen Zigarettenstrangmaschinen in der Regel das Untertrumm eines von seiner Rückseite her mit Unterdruck beaufschlagten Saugbandes benutzt, so dass diese Art der Strangförderer auch als Saugstrang-förderer bezeichnet werden.

Die Länge der Förderstrecke des Saugstrangförderers und die hohe Geschwindigkeit der modernen Zigarettenstrangmaschinen stellen hohe Anforderungen an die den Lauf des Strangförderers direkt oder indirekt beeinflussenden Teile der Vorrichtung. Insbesondere die eingangs genannten Lager sind hohen Beanspruchungen und somit hohem Verschleiß durch die sehr schnell rotierenden Stützrollen ausgesetzt.

Aufgabe der vorliegenden Erfindung ist es, die aus dem Stand der Technik bekannten Lager zu verbessern.

Diese Aufgabe wird durch ein Lager gemäß Anspruch 1 gelöst.

Ausführungsformen des erfindungsgemäßen Lagers weisen insbesondere den Vorteil auf, dass die Lager formschlüssig zu befestigen sind und nicht mehr in zugeordnete, für die Lager vorgesehene Öffnungen in einer Wange eines Stützrollenhalters einer Zigarettenstrangmaschine eingeklebt werden müssen, wie dies im Stand der Technik geschieht. Somit sind bei diesen Ausführungsformen die Lager leicht zu reparieren und auszutauschen. Vor allem ist entgegen dem Stand der Technik bei diesen Ausführungsformen zum Austauschen des Lagers nicht der Austausch der ganzen Wange notwendig. Diese Ausführungsformen der Erfindung erzielen daher eine ganz erhebliche Zeit und Kostenersparnis gegenüber dem Stand der Technik.

Bevorzugt ist der Innendurchmesser der Lagerbuchse ohne einen eingesetzten Lagerzapfen kleiner als der Durchmesser eines für die Lagerbuchse vorgesehen Lagerzapfens. Auf diese Weise kann der für die Buchse vorgesehene Lagerzapfen die Lagerbuchse etwas weiten und somit bspw. in die vorgenannte Öffnung der Wange einklemmen.

Besonders bevorzugte Ausführungsbeispiele der Erfindung zeichnen sich dadurch aus, dass die Lagerbuchse zweiteilig ausgebildet ist. Dabei kann die Lagerbuchse mindestens einen inneren Teil und mindestens einen äußeren im bestimmungsgemäßen Zustand koaxialen Teil aufweisen, wobei der äußere Teil den inneren Teil zumindest entlang eines Abschnitts seiner Längserstreckung umschließt.

Der Innendurchmesser des äußeren Teils sollte zumindest bei nicht eingesetztem Lagerzapfen etwas geringer sein als der Außendurchmesser des inneren Teils. Somit lässt sich durch das Einsetzen des Lagerzapfens in den inneren Teil der innere Teil in dem äußeren Teil und dieser wiederum in der vorgenannten Öffnung einklemmen.

Bevorzugt umschließt der äußere Teil nur einen Abschnitt der Längserstreckung des inneren Teils. Dabei ist der innere Teil beispielsweise hülsenförmig ausgebildet, welcher den für die Buchse vorgesehenen Lagerzapfen entlang der Längserstreckung des Lagerzapfens teilweise umschließt. Der äußere, auch Tablette genannte Teil, ist demgegenüber eher flacher bzw. scheiben- oder ringförmig ausgebildet. Dabei besteht die Tablette bevorzugt aus Hartmetall, während die Hülse bevorzugt aus Stahl besteht.

In diesem Fall ist es weiter bevorzugt, wenn im wesentlichen nur der nicht von der Tablette umschlossene Abschnitt der Hülse durch den Lagerzapfen in seinem Durchmesser erweitert und somit in der Öffnung eingeklemmt wird, also nur der nicht von der Tablette umschlossene Abschnitt der Hülse die Hauptlast der Kraftausübung gegen die Öffnung trägt. Denn auf diese Weise kann die Tablette vor zu großen Kräften geschont werden. Somit wird bei druckempfindlichen Tabletten eine Beschädigung vermieden.

Ausführungsformen der Erfindung zeigen einen Innendurchmesser des äußeren Teils, der zumindest entlang eines Abschnitts seiner Längserstreckung von einer als seine Außenseite vorgesehenen Oberfläche zu einer als seine Innenseite vorgesehenen Oberfläche abnimmt. Dabei ist es bevorzugt, wenn entsprechend der Außendurchmesser des inneren Teils zumindest in einem Abschnitt des Bereichs, in dem der innere Teil von dem äußeren Teil umschlossen ist, entsprechend der Abnahme des Innendurchmessers des äußeren Teils abnimmt. Auf diese Weise lässt sich insbesondere bei der im vorigen Absatz beschriebenen Ausführungsform nach dem Einsetzen der Tablette, d.h. des äußeren Teils, und der Hülse, d.h. des inneren Teils, in die dafür in der Wange vorgesehene Öffnung, zum einen mit Hilfe des Lagerzapfens, der bevorzugt aus Hartmetall besteht, die Hülse im von der Tablette nicht umschlossenen Abschnitt weiten und somit eine Klemmverbindung zwischen Lagerzapfen, Hülse und der Wange herstellen. Zum anderen kann auch die weniger stark eingeklemmte Tablette aufgrund der Abnahme ihres Innendurchmessers von der Hülse in der Öffnung gehalten werden.

Um die angesprochene Weitung des inneren Teils zu erleichtern, kann der innere Teil zumindest entlang eines Teils seiner Längserstreckung einen sich in Richtung der Längsachse erstreckenden Schlitz aufweisen.

Bei einer anderen bevorzugten Ausführungsform der Erfindung weist die Lagerbuchse eine Sicherung gegen Verdrehen innerhalb der Wange auf. Hierfür kann beispielsweise der äußere Teil der Buchse eine Nase aufweisen, die in eine Ausnehmung in der Öffnung in der Wange eingreift. Ebenso kann vorgesehen sein, dass die Öffnung in der Wange eine Nase aufweist, die in eine Ausnehmung in der Lagerbuchse, bevorzugt im äußeren Teil der Lagerbuchse, eingreift. Auch können alle denkbaren Kombinationen der beiden vorgenannten Sicherungsarten verwendet werden.

Weitere bevorzugte Ausführungsformen der Erfindung sind in den Unteransprüchen angegeben.

Ein Ausführungsbeispiel der Erfindung wird nun anhand der Zeichnung erläutert. Die Zeichnung zeigt:
- Figur 1: eine perspektivische Ansicht einer Wange eines Saugstrangförderers einer Zigarettenstrangmaschine mit erfindungsgemäßen Lagern in einer Ausführungsform der Erfindung; und
- Figur 2: einen Querschnitt durch die Wange der Figur 1 an der Stelle A-A.

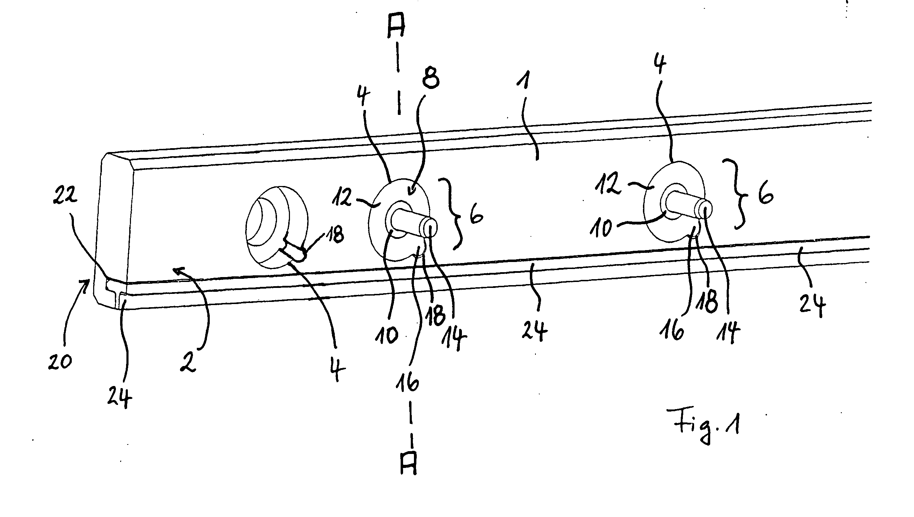

Figur 1 zeigt eine Wange 1 in einer perspektivischen Ansicht. Zur Beschreibung der Verwendung derartiger Wangen 1 und zu deren Einbauort sei beispielsweise auf die eingangs erwähnte EP 1169926 A1 verwiesen.

Die dargestellte Wange 1 weist eine Oberfläche 2 auf, die einer zweiten, parallelen, nicht dargestellten Wange eines Saugstrangförderers einer Zigarettenstrangmaschine zugewandt ist. Die Wange 1 weist kreisförmige Öffnungen 4 auf, in die die Lager 6 für nicht dargestellte Stützrollen des Strangförderers eingesteckt werden können. Zur Verdeutlichung ist im linken Teil der Figur 1 eine Öffnung 4 ohne ein eingestecktes Lager 6 dargestellt. In die beiden in der Figur 1 rechts dargestellten Öffnungen 4 ist jeweils ein Lager 6 eingesteckt. Für die Beschreibung derartiger Strangförderer sei beispielsweise auf die eigene DE 19733443 A1 verwiesen.

Das Lager 6 besteht jeweils aus einer Lagerbuchse 8 mit einem inneren, hülsenförmigen Teil 10 und einem äußeren, scheibenförmigen Teil 12, und aus einem Lagerzapfen 14.

Der äußere, auch als Tablette bezeichnete Teil 12 der Buchse 8 weist eine Nase 16 auf, die passend zu einer entsprechenden Ausnehmung 18 in der Öffnung 4 ausgebildet ist. Durch das Einrasten der Nase 16 in die Ausnehmung 18 wird eine Drehung des Lagers 6, insbesondere des äußeren Teils 12, in der Öffnung 4 verhindert.

Auf die Lagerzapfen 14 werden nicht dargestellte Stützrollen zum Stützen eines nicht dargestellten Strangförderers zum Fördern eines nicht dargestellten Stranges der tabakverarbeitenden Industrie aufgesteckt.

An ihrem unteren Ende 20 weist die Wange 1 eine Nut 22 auf, in die eine Bandführungsleiste 24 zum Führen eines nicht dargestellten Saugbandes des Strangförderers eingeklemmt ist. Die Bandführungsleiste 24 weist einen im wesentlichen T-förmigen Querschnitt auf.

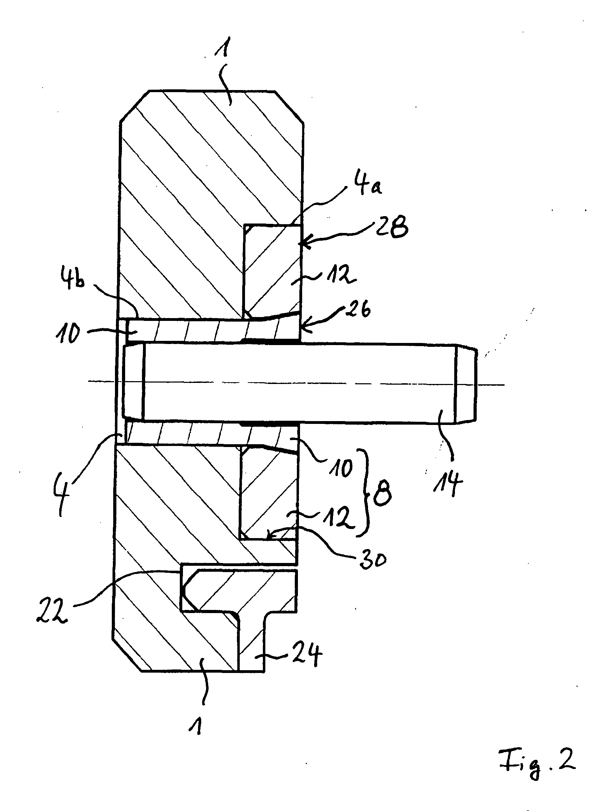

Figur 2 zeigt einen Querschnitt durch die Wange 1 der Figur 1 an der Stelle A-A. Aus Figur 2 ist zu erkennen, dass die Öffnung 4 zwei Abschnitte aufweist, einen in der Figur 2 rechts dargestellten Abschnitt 4a mit größerem Durchmesser und einen in der Figur 2 links dargestellten Abschnitt 4b mit kleinerem Durchmesser. Der innere Teil 10 der Lagerbuchse 8 weist im wesentlichen den kleineren Durchmesser 4b auf und erstreckt sich im wesentlichen vollständig durch die Öffnung 4 in der Wange 1 hindurch.

Im Bereich des Durchmessers 4b der Öffnung 4 entspricht der Außendurchmesser des inneren Teils 10 dem Durchmesser 4b. Im Bereich des Durchmessers 4a der Öffnung 4 weist der innere Teil 10 jedoch einen zu seiner als Außenseite vorgesehenen Oberfläche 26 hin zunehmenden Außendurchmesser auf. Entsprechend weist der äußere Teil 12 einen zu seiner als Außenseite vorgesehenen Oberfläche 28 hin abnehmenden Innendurchmesser auf. Dabei ist folgendes hervorzuheben:

Der Innendurchmesser des inneren Teils 10 ist zumindest bei nicht eingestecktem Lagerzapfen 14 zumindest im Bereich 4b der Öffnung 4 etwas kleiner als der Außendurchmesser des Lagerzapfens 14. Auf diese Weise wird die bevorzugt mit einem nicht dargestellten Schlitz versehene Hülse 10 beim Einstecken des Lagerzapfens 14 in die in der Figur 2 dargestellte Position geweitet, d.h. in ihrem Außendurchmesser zumindest im Bereich des Abschnittes 4b vergrößert, und somit von Innen gegen die Wange 1 gepresst, um so eine Klemmverbindung zwischen dem Lagerzapfen 14, dem vom äußeren Teil 12 nicht umschlossenen Abschnitt 4b des inneren Teils 10 und der Wange 1 herzustellen.

Tritt nun ein Verschleiß an dem Lagerzapfen 14 und/oder an dem äußeren Teil 12 auf, so kann der Lagerzapfen 14 herausgezogen werden, so dass sich die vorgenannte Klemmverbindung löst. Auf diese Weise kann der Lagerzapfen 14 leicht zusammen mit der Lagerbuchse 8 ausgetauscht werden, ohne dass ein Austausch der Wange 1 notwendig ist.

## Patentansprüche

1. Lager (6) für Stützrollen zum Stützen eines Saugbands zum Fördern eines Strangs der tabakverarbeitenden Industrie,
mit einer Lagerbuchse (8) zum Aufnehmen eines Lagerzapfens (14), **dadurch gekennzeichnet, dass** der Außendurchmesser zumindest eines Abschnittes der Lagerbuchse (8) mit Hilfe des Lagerzapfens (14) vergrößerbar ist.

2. Lager (6) nach Anspruch 1,
wobei der Innendurchmesser der Lagerbuchse (8) zumindest entlang eines Abschnitts der Lagerbuchse (8) ohne eingesetzten Lagerzapfen (14) kleiner ist als der Durchmesser des Lagerzapfens (14).

3. Lager (6) nach einem der vorstehenden Ansprüche,
wobei die Lagerbuchse (8) mindestens zweiteilig ausgebildet ist.

4. Lager (6) nach einem der vorstehenden Ansprüche,
wobei die Lagerbuchse (8) mindestens einen inneren, bevorzugt hülsenförmigen, Teil (10) und mindestens einen äußeren, bevorzugt scheibenförmigen, im bestimmungsgemäßen Zustand koaxialen Teil (12) aufweist, wobei der äußere Teil (12) den inneren Teil (10) zumindest entlang eines Abschnitts seiner Längserstreckung umschließt.

5. Lager (6) nach dem vorstehenden Anspruch,
wobei der Außendurchmesser des inneren Teils (10) zumindest bei nicht eingesetztem Lagerzapfen (14) größer ist als der Innendurchmesser des äußeren Teils (12).

6. Lager (6) nach einem der beiden vorstehenden Ansprüche,
wobei der Innendurchmesser des äußeren Teils (12) zumindest entlang eines Abschnitts seiner Längserstreckung von einer als seine Außenseite vorgesehenen Oberfläche (28) zu einer als seine Innenseite vorgesehenen Oberfläche hin abnimmt.

7. Lager (6) nach einem der drei vorstehenden Ansprüche,
wobei der Außendurchmesser des inneren Teils (10) zumindest in einem Abschnitt des Bereichs, in dem es vom äußeren Teil (12) umschlossen ist, von einer als seine Außenseite vorgesehenen Oberfläche (26) zu einer als seine Innenseite vorgesehenen Oberfläche hin abnimmt, bevorzugt entsprechend der Abnahme des Innendurchmessers des äußeren Teils (12) gemäß dem vorstehenden Anspruch.

8. Lager (6) nach einem der vier vorstehenden Ansprüche,
wobei die Lagerbuchse (8), bevorzugt ihr innerer Teil (10), einen sich zumindest entlang eines Teils ihrer Längserstreckung verlaufenden Schlitz aufweist.

9. Lager (6) nach einem der vorstehenden Ansprüche,
wobei die Lagerbuchse (8), bevorzugt ihr äußerer Teil (12), eine Sicherung (16) gegen ein Verdrehen innerhalb einer zugeordneten, für das Lager (6) vorgesehenen Öffnung (4) in einer Wange (1) eines Stützrollenhalters einer Zigarettenstrangmaschine aufweist.

10. Lager (6) nach dem vorstehenden Anspruch,
wobei die Sicherung (16) eine am Außenumfang der Lagerbuchse (8) ausgebildete Nase (16) aufweist, die bevorzugt so ausgebildet ist, dass sie mit einer entsprechenden Ausnehmung (18) in der zugeordneten Öffnung (4) zusammenwirken kann.

11. Strangförderer, insbesondere einer Zigarettenstrangmaschine, mit einem Lager (6) nach einem der vorstehenden Ansprüche.

## Claims

1. Bearing (6) for supporting rollers for supporting a suction belt for conveying a rod of the tobacco processing industry,
having a bearing bush (8) for receiving a bearing journal (14), **characterised in that** the outside diameter of at least one section of the bearing bush (8) can be increased with the aid of the bearing journal (14).

2. Bearing (6) according to Claim 1,
the inside diameter of the bearing bush (8) being smaller, at least along one section of the bearing bush (8), than the diameter of the bearing journal (14) when the bearing journal (14) is not inserted.

3. Bearing (6) according to one of the preceding claims, the bearing bush (8) being formed of at least two parts.

4. Bearing (6) according to one of the preceding claims, the bearing bush (8) having at least one inner, preferably sleeve-shaped, part (10) and at least one outer, preferably disc-shaped, part (12) which is coaxial in the normal state as intended, the outer part (12) enclosing the inner part (10) at least along one section of its longitudinal extent.

5. Bearing (6) according to the preceding claim,
the outside diameter of the inner part (10) being greater than the inside diameter of the outer part (12) at least when the bearing journal (14) is not inserted.

6. Bearing (6) according to one of the two preceding claims,
the inside diameter of the outer part (12) decreasing, at least along one section of its longitudinal extent, from a surface (28) provided as its outer side towards a surface provided as its inner side.

7. Bearing (6) according to one of the three preceding claims,
the outside diameter of the inner part (10) decreasing, at least in one section of the region in which it is enclosed by the outer part (12), from a surface (26) provided as its outer side towards a surface provided as its inner side, preferably in a manner corresponding to the decrease of the inside diameter of the outer part (12) according to the preceding claim.

8. Bearing (6) according to one of the four preceding claims,
the bearing bush (8), preferably its inner part (10), having a slot running at least along one part of its longitudinal extent.

9. Bearing (6) according to one of the preceding claims, the bearing bush (8), preferably its outer part (12), having a locking means (16) to prevent rotation within an associated opening (4), provided for the bearing (6), in a cheek (1) of a supporting-roller holder of a cigarette rod making machine.

10. Bearing (6) according to the preceding claim,
the locking means (16) having a lug (16) which is formed on the outer circumference of the bearing bush (8) and is preferably configured in such a way that it can cooperate with a corresponding recess (18) in the associated opening (4).

11. Rod conveyor, in particular of a cigarette rod making machine, having a bearing (6) according to one of the preceding claims.

## Revendications

1. Palier (6) pour des rouleaux d'appui destinés à servir d'appui à une bande aspirante de transport d'un boudin de l'industrie de transformation du tabac,
comportant un coussinet de palier (8) destiné à recevoir un tourillon de palier (14),
**caractérisé en ce que** le diamètre extérieur d'au moins un tronçon du coussinet de palier (8) peut être agrandi à l'aide du tourillon de palier (14).

2. Palier (6) selon la revendication 1,
dans lequel le diamètre intérieur du coussinet de palier (8), au moins le long d'un tronçon du coussinet de palier (8), est, sans tourillon de palier (14) inséré, plus petit que le diamètre du tourillon de palier (14).

3. Palier (6) selon l'une des revendications précédentes,
dans lequel le coussinet de palier (8) est réalisé en deux éléments au moins.

4. Palier (6) selon l'une des revendications précédentes,
dans lequel le coussinet de palier (8) présente au moins un élément intérieur (10), de préférence en forme de douille, et au moins un élément extérieur (12), de préférence en forme de rondelle, coaxial dans l'état conforme à l'affectation, l'élément extérieur (12) entourant l'élément intérieur (10) au moins le long d'une partie de sa dimension longitudinale.

5. Palier (6) selon la revendication précédente,
dans lequel le diamètre extérieur de l'élément intérieur (10), au moins lorsque le tourillon de palier (14) n'est pas inséré, est plus grand que le diamètre intérieur de l'élément extérieur (12).

6. Palier (6) selon l'une des deux revendications précédentes,
dans lequel le diamètre intérieur de l'élément extérieur (12), au moins le long d'une partie de sa dimension longitudinale, diminue d'une surface (28) destinée à constituer sa face extérieure à une surface destinée à constituer sa face intérieure.

7. Palier (6) selon l'une des trois revendications précédentes,
dans lequel le diamètre extérieur de l'élément intérieur (10), au moins dans une partie de la zone dans laquelle il est entouré par l'élément extérieur (12), diminue d'une surface (26) destinée à constituer sa face extérieure à une surface destinée à constituer sa face intérieure, de préférence d'une façon correspondant à la diminution du diamètre intérieur de l'élément extérieur (12) conforme à la revendication précédente.

8. Palier (6) selon l'une des quatre revendications précédentes,
dans lequel le coussinet de palier (8), de préférence son élément intérieur (10), présente une fente s'étendant au moins le long d'une partie de sa dimension longitudinale.

9. Palier (6) selon l'une des revendications précédentes,
dans lequel le coussinet de palier (8), de préférence son élément extérieur (12), présente une sécurité (16) contre une rotation à l'intérieur d'une ouverture associée (4) prévue pour le palier (6), dans une joue (1) d'un support de rouleaux d'appui d'une machine à former des boudins de cigarettes.

10. Palier (6) selon la revendication précédente,
dans lequel la sécurité (16) comporte un ergot (16) formé sur la périphérie extérieure du coussinet de palier (8) et qui, de préférence, est d'une configuration telle, qu'il puisse coopérer avec un évidement correspondant (18) dans l'ouverture associée (4).

11. Transporteur de boudin, en particulier d'une machine à former des boudins de cigarettes, comportant un palier (6) selon l'une des revendications précédentes.
